# EUROPEAN PATENT APPLICATION

(11) **EP 1 876 802 A2**
(43) Date of publication of application: **09.01.2008**
(21) Application number: 07102414.5
(22) Date of filing: 14.02.2007
(51) Int. Cl.: H04M 1/02, H04M 1/725

(54) **Portable electronic system**

(30) Priority: 06.07.2006 CN 200610103036
(71) Applicant: Inventec Corporation, Shih-Lin District 111 Taipei (TW)
(72) Inventor: Wu, Po-Hsiang, 111 Taipei (TW); Chou, Yun-Sheng, 111 Taipei (TW)
(74) Representative: Patentanwälte Kewitz & Kollegen

(57) **Abstract**

A portable electronic system includes a mobile communication device for providing a communication function, and a digital assistant device for providing an assistant function. The mobile communication device has a first structural connecting portion and a first signal connecting portion. The digital assistant device has a second structural connecting portion and a second signal connecting portion. In this case, the first structural connecting portion is to be connected to the second structural connecting portion to assemble the mobile communication device with the digital assistant device. The first signal connecting portion is to be signally connected to the second signal connecting portion.

## Description

### BACKGROUND OF THE INVENTION

### Field of Invention

The invention relates to a portable electronic system, and, in particular, to a portable electronic system including a mobile communication device and a digital assistant device integrated together.

### Related Art

With the development of technology, many electronic products have been miniaturized, so that portable electrical devices, such as notebook computers, personal digital assistants (PDA), mobile communication devices and the like, can be gradually develop. Recently, personal digital assistants and mobile communication devices are developing especially rapidly toward miniaturization size and increasing functionality such that these products can be more easily carried by the user.

In general, mobile communication devices mainly provide a mobile communication function and may require components such as an antenna module, a radio frequency module, a baseband module, a display module and even a keyboard module. A PDA primarily provides assistive functions, such as a GPS navigation function, a daily planning function, a video recording function, a data storing function and the like. Thus, comparing the mobile communication device with the personal digital assistant, the personal digital assistant usually needs more processing power and a larger memory capacity. Correspondingly, the mobile communication device needs to provide powerful communication functions (e.g., support of a dual-band, triple-band or quadruple-band antenna module), and greater portability.

As mentioned hereinabove, the main functions of the mobile communication device and the personal digital assistant are slightly different from one another. Thus, the requirements of some users cannot be satisfied if the product only possesses the mobile communication device or the personal digital assistant. Thus, the manufacturer has produced a mobile communication device, such as a smart mobile phone, having integrated personal digital assistant functions. However, this mobile phone is large in size and cannot be carried conveniently. Furthermore, this type of mobile phone cannot achieve the powerful function of personal digital assistants. Therefore, the user may feel that the function of the product is insufficient.

Thus, it is an important subject of the invention to provide an electronic system having the integrated functions of the mobile communication device and the personal digital assistant.

### SUMMARY OF THE INVENTION

In view of the foregoing, the invention is to provide an effective portable electronic system having the integrated functions of a mobile communication device and a personal digital assistant.

To achieve the above, the invention discloses a portable electronic system including a mobile communication device and a digital assistant device. In this invention, the mobile communication device provides a communication function and the digital assistant device provides an assistant function. The mobile communication device has a first structural connecting portion and a first signal connecting portion, and the digital assistant device has a second structural connecting portion and a second signal connecting portion. The first structural connecting portion is to be connected to the second structural connecting portion to assemble the mobile communication device and the digital assistant device together. The first signal connecting portion is to be connected to the second signal connecting portion via a signal.

As mentioned above, the portable electronic system of the invention includes a mobile communication device and a digital assistant device. The mobile communication device and the digital assistant device are assembled together through the structural connecting portions and communicate with each other through the signal connecting portions. So, the functions of the mobile communication device and the personal digital assistant can be effectively integrated to integrate the multiple functions of these two devices and thereby make their use more convenient. In addition, the mobile communication device and the digital assistant device may be used separately. Thus, when the user only needs to use the communication function, he or she only has to take out the mobile communication device to achieve the desired communication function. On the contrary, when the user only needs to use the assistant function, he or she only has to take out the digital assistant device to achieve the desired assistant function. Thus, the independent functions of the mobile communication device and the personal digital assistant can also be individually used, if so desired. Due to the integration and flexibility of this device, the convenience to the user and the competitiveness of the product may be enhanced.

### BRIEF DESCRIPTION OF THE DRAWINGS

The invention will become more fully understood from the detailed description given herein below illustration only, and thus is not limitative of the present invention, and wherein:

FIG. 1 is a schematic illustration showing a portable electronic system, which includes a mobile communication device and a digital assistant device, according to a preferred embodiment of the invention;

FIG. 2A is a block diagram showing the mobile communication device of the portable electronic system according to a preferred embodiment of the invention;

FIG. 2B is a block diagram showing the digital assistant device of the portable electronic system according to a preferred embodiment of the invention;

FIG. 3 is a schematic illustration showing the combination of the mobile communication device and the digital assistant device of the portable electronic system according to a preferred embodiment of the invention;

FIG. 4 is a schematic illustration showing the portable electronic system according to a preferred embodiment of the invention, wherein the digital assistant device further includes a touch-control module; and

FIG. 5 is a schematic illustration showing the portable electronic system according to a preferred embodiment of the invention, wherein the digital assistant device further includes an image scale-up module.

### DETAILED DESCRIPTION OF THE INVENTION

The present invention will be apparent from the following detailed description, which proceeds with reference to the accompanying drawings, wherein the same references relate to the same elements.

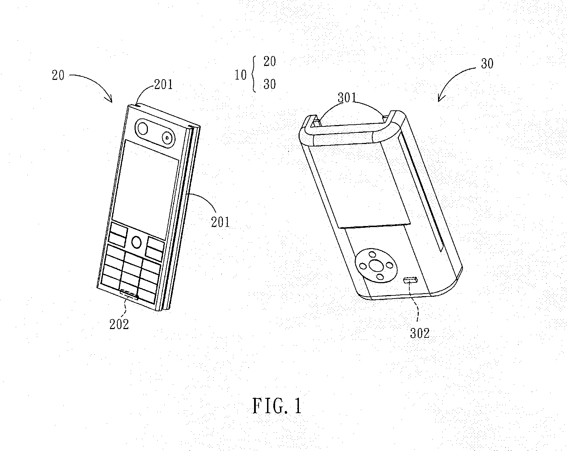

Referring to FIG. 1, a portable electronic system 10 according to the preferred embodiment of the invention includes a mobile communication device 20 and a digital assistant device 30. In this embodiment, the mobile communication device 20 is a mobile phone or smart mobile phone, and the digital assistant device 30 is a personal digital assistant (PDA).

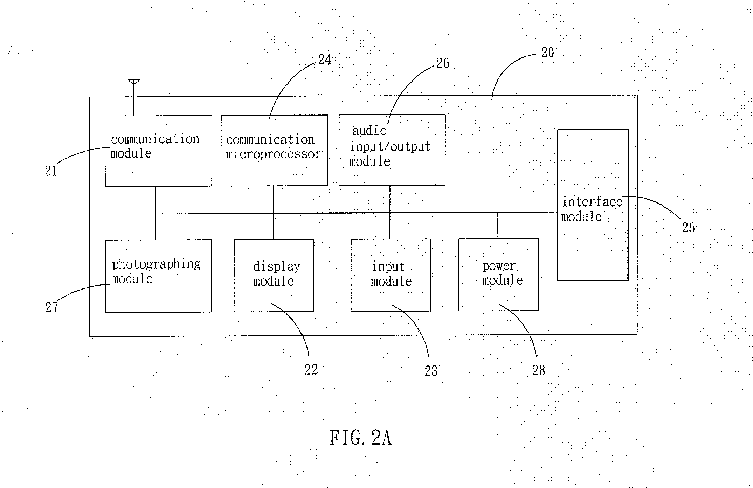

As shown in FIG. 1, the mobile communication device 20 has a first structural connecting portion 201 and a first signal connecting portion 202. In this embodiment, the mobile communication device 20 provides a communication function. Of course, the mobile communication device 20 may also provide other additional functions, such as a camera function, address book function, and other functions. The schematic block diagram of the internal module of the mobile communication device 20 will be described in the following by way of example. As shown in FIG. 2A, the mobile communication device 20 usually includes a communication module 21, a display module 22, an input module 23, a communication microprocessor 24, an interface module 25, an audio input/output module 26, a photographing module 27 and a power module 28. The communication module 21 receives/transmits a communication signal to provide the communication functions, and usually includes an antenna unit, a radio frequency unit and a baseband unit. The display module 22, which may be, for example, an LCD display module, displays the information. The input module 23, such as a keyboard module or a touch-control module, inputs the information. The communication microprocessor 24 mainly processes the communication signals received by the communication module 21. Of course, the communication microprocessor 24 may also process other signals of the mobile communication device 20. The interface module 25 may be a USB interface, a USB-OTG interface, or any other suitable interface. The audio input/output module 26 may have a sound outputting portion and a sound receiving portion, such as a speaker and a microphone, in the mobile communication device 20. The photographing module 27 provides an additional camera function, and the photographing module 27 and the display module 22 may be disposed at the same side of the mobile communication device 20, or at opposite sides of the mobile communication device 20. The power module 28 may be a rechargeable battery. In addition, the interface module 25 may be connected to the first signal connecting portion 202 in order to transfer the signals through the interface module 25 when the first signal connecting portion 202 is connected to another signal connecting portion. In addition, the interface module 25 and the first signal connecting portion 202 may also be integrated into a USB interface, a USB-OTG interface, or any other suitable interface.

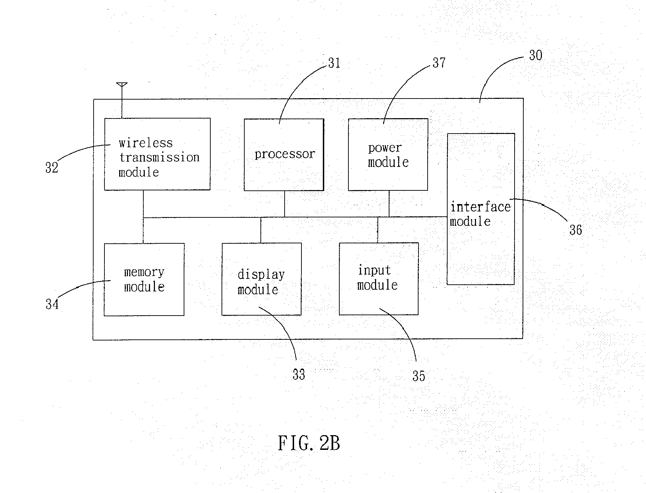

Referring again to FIG. 1, the digital assistant device 30 has a second structural connecting portion 301 and a second signal connecting portion 302. In this embodiment, the digital assistant device 30 provides an assistant function, such as a GPS navigation function, a daily planning function, a video recording function, a data storing function and a wireless transmission function. The schematic block diagram of the internal module in the digital assistant device 30 will be described in the following. As shown in FIG. 2B, the digital assistant device 30 usually includes a processor 31, a wireless transmission module 32, a display module 33, a memory module 34, an input module 35, an interface module 36 and a power module 37. The processor 31 mainly processes the signals of the digital assistant device 30, thereby providing the required functions, such as the GPS navigation function, the activity management function, the data storing function and the like. The wireless transmission module 32 receives/transfers the signals in a wireless manner. Herein, the wireless transmission module 32 may be, for example, a digital television signal receiving module, a wireless signal receiving module, a GPS signal receiving module, a WiFi transmission module, a bluetooth transmission module or the like. The display module 33, which may be, for example, an LCD display module, displays the information. The memory module 34, which may be SDRAM, flash memory or external memory (e.g., SD card), mainly provides a buffer for storing data or temporarily storing the calculated data. The input module 35, which may be a keyboard module or a touch-control module, inputs the information. The interface module 36 may be a USB interface, a USB-OTG interface or any other suitable interface. The power module 37 may be a rechargeable battery. In this embodiment, the interface module 36 may be connected to the second signal connecting portion 302 in order to transfer signals to or receive signals from the interface module 25 of the mobile communication device 20 through the interface module 36 of the digital assistant device 30 when the second signal connecting portion 302 is connected to the first signal connecting portion 202. In addition, the interface module 36 and the second signal connecting portion 302 may also be integrated into a USB interface, a USB-OTG interface or any other suitable interface.

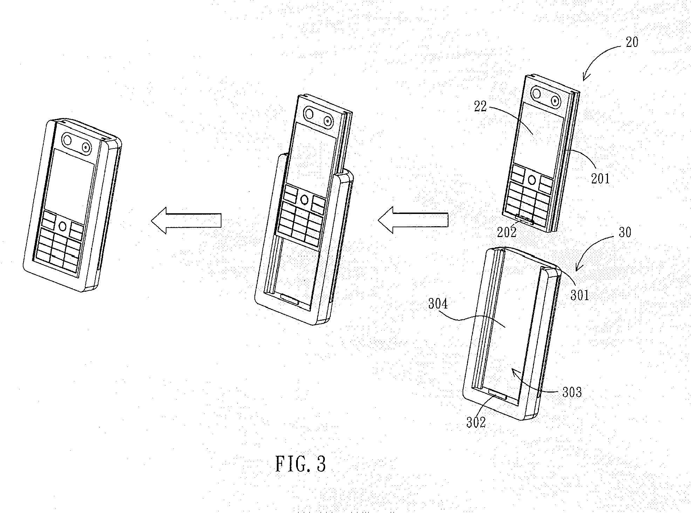

Next, the method of assembling the mobile communication device 20 with the digital assistant device 30 will be described with reference to FIG. 3. First, the first structural connecting portion 201 of the mobile communication device 20 is aligned with the second structural connecting portion 301 of the digital assistant device 30. In this embodiment, the first structural connecting portion 201 includes two projecting tracks disposed at opposite sides of the mobile communication device 20, and the second structural connecting portion 301 includes two slots disposed on opposite sides of the digital assistant device 30. Next, the mobile communication device 20 slides into the digital assistant device 30. At this time, the first structural connecting portion 201 of the mobile communication device 20 slides in the second structural connecting portion 301 of the digital assistant device 30. Furthermore, the two projecting tracks disposed on the opposite sides of the mobile communication device 20 slide into the two slots disposed on the opposite sides of the digital assistant device 30. Finally, when the mobile communication device 20 completely slides into the digital assistant device 30, the first signal connecting portion 202 disposed at the bottom of the mobile communication device 20 is connected to the second signal connecting portion 302 disposed at the bottom of the digital assistant device 30. Thus, the mobile communication device 20 and the digital assistant device may be assembled together smoothly. It is to be noted that the mobile communication device 20 and the digital assistant device 30, when not assembled, may each individually serve as a mobile phone and a PDA respectively.

In addition, as shown in FIG. 3, the slots (second signal connecting portion 302) of the digital assistant device 30 constitute a containing portion 303, and the containing portion 303 has an opening 304 disposed between the slots. Thus, when the mobile communication device 20 and the digital assistant device 30 are assembled together, the display module 22 of the mobile communication device 20 is disposed in the opening 304. As mentioned hereinabove, when the mobile communication device 20 and the digital assistant device 30 are assembled together to constitute the portable electronic system 10, the system 10 has one surface, on which the display module 22 of the mobile communication device 20 is disposed, and the other surface, on which the display module 33 of the digital assistant device 30 is disposed. Furthermore, the portable electronic system 10 constituted by the mobile communication device 20 and the digital assistant device 30 integrate the functions of the mobile communication device 20 and the digital assistant device 30 so as to provide more powerful functionality. For example, combining the function of the communication module 21 of the mobile communication device 20 and the GPS navigation function of the wireless transmission module 32 of the digital assistant device 30 can provide the more precise positioning function to thus upgrade the GPS navigation function.

In addition, the first signal connecting portion 202 of the mobile communication device 20 may also be connected to the second signal connecting portion 302 of the digital assistant device 30 via a wireless signal. For example, the first signal connecting portion 202 and the second signal connecting portion 302 may be both bluetooth wireless transceiver modules or infrared wireless transceiver modules, Thus, the first signal connecting portion 202 may be connected to the second signal connecting portion 302 via bluetooth wireless transmission or via infrared wireless transmission.

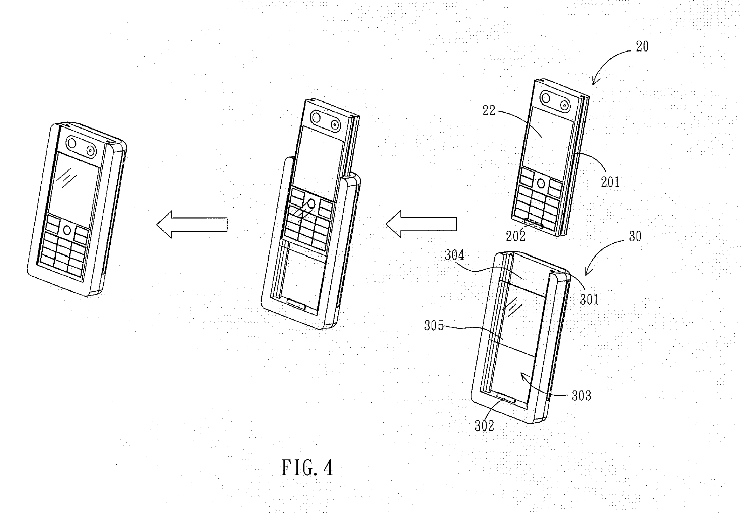

In addition, as shown in FIG. 4, the digital assistant device 30 may further include a touch-control module 305 disposed in the opening 304. Thus, when the mobile communication device 20 and the digital assistant device 30 are combined together, the touch-control module 305 is disposed opposite to the display module 22 of the mobile communication device 20. According to such a design, if the display module 22 of the mobile communication device 20 does not originally have the touch-control function, the provision of the touch-control module 305 can provide the touch-control operation of the mobile communication device 20.

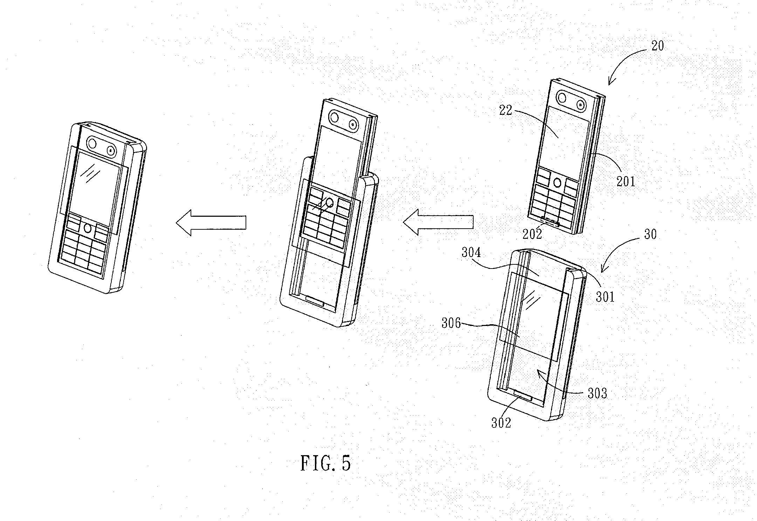

Furthermore, referring to FIG. 5, the digital assistant device 30 may further include an image scale-up module 306 disposed in the opening 304. Thus, when the mobile communication device 20 and the digital assistant device 30 are assembled together, the image scale-up module 306 is disposed opposite to the display module 22 of the mobile communication device 20. In this embodiment, the image scale-up module 306 may be a convex lens. According to such a design, if the display module 22 of the mobile communication device 20 measures 2.5 inches and the image scale-up module 306 measures 3.5 inches, the image displayed on the display module 22 may be effectively scaled up when the user watches the image through the image scale-up module 306, thereby facilitating the operation of the device.

In summary, the portable electronic system of the invention includes a mobile communication device and a digital assistant device. The mobile communication device and the digital assistant device are assembled together through the structural connecting portions and communicate with each other through the signal connecting portions. So, the functions of the mobile communication device and the personal digital assistant can be effectively integrated to integrate the multiple functions of these two devices and thereby make their use more convenient. In addition, the mobile communication device and the digital assistant device may be used separately. Thus, when the user only needs to use the communication function, he or she only has to take out the mobile communication device to achieve the desired communication function. On the contrary, when the user only needs to use the assistant function, he or she only has to take out the digital assistant device to achieve the desired assistant function. Thus, the independent functions of the mobile communication device and the personal digital assistant can also be individually used, if so desired. Due to the integration and flexibility of this device, the convenience to the user and the competitiveness of the product may be enhanced.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A portable electronic system (10), comprising:
a mobile communication device (20) for providing a communication function and having a first structural connecting portion (201) and a first signal connecting portion (202); and
a digital assistant device (30) for providing an assistant function and having a second structural connecting portion (301) and a second signal connecting portion (302), wherein the first structural connecting portion (201) is to be connected to the second structural connecting portion (301) to assemble the mobile communication device and the digital assistant device together, and the first signal connecting portion (202) is to be signally connected to the second signal connecting portion (302).

2. The system according to claim 1, wherein the mobile communication device (20) comprises a display module (22) for displaying information, an input module (23) for inputting information, and a communication module (21) for providing the communication function.

3. The system according to claim 1 or 2, wherein the digital assistant device (30) comprises a processor (31), a wireless transmission module (32), a display module (33), a memory module (34) and an input module (35).

4. The system according to any of the preceding claims, wherein the first structural connecting portion (201) comprises two projecting tracks disposed on opposite sides of the mobile communication device (20), the second structural connecting portion (301) comprises two slots disposed on opposite sides of the digital assistant device (30), and the projecting tracks of the mobile communication device may respectively slide in the slots of the digital assistant device.

5. The system according to claim 4, wherein the slots of the digital assistant device (30) constitute a containing portion, which has an opening disposed between the slots, and the mobile communication device (20) has a display module, which is disposed in the opening when the mobile communication device and the digital assistant device are assembled together.

6. The system according to claim 5, wherein the digital assistant device (30) has a display module (33), and the display module of the digital assistant device and the display module (22) of the mobile communication device (20) are disposed on opposite sides of the portable electronic system when the mobile communication device and the digital assistant device are assembled together.

7. The system according to claim 5, wherein the second signal connecting portion (302) is disposed in the containing portion.

8. The system according to any of claims 5 to 7, wherein the digital assistant device (30) further comprises a touch-control module (305) disposed in the opening (304), and the touch-control module is correspondingly disposed on the display module (22) of the mobile communication device (20) to provide a touch-control operation for the mobile communication device when the mobile communication device and the digital assistant device are assembled together.

9. The system according to any of claims 5 to 8, wherein the digital assistant device further comprises an image scale-up module (306) disposed in the opening (304), and when the mobile communication device (20) and the digital assistant device (30) are assembled together, the image scale-up module is correspondingly disposed on the display module (22) of the mobile communication device to scale-up a displayed image on the display module of the mobile communication device.

10. The system according to claim 9, wherein the image scale-up module (306) is a convex lens.

11. The system according to any of the preceding claims, wherein the first signal connecting portion (202) and the second signal connecting portion (302) are signally connected to each other via a wireless signal.

12. The system according to claim 11, wherein the first signal connecting portion (202) and the second signal connecting portion (302) are both bluetooth wireless modules or are both infrared wireless modules.

13. The system according to any of claims 1 to 10, wherein the first signal connecting portion (202) and the second signal connecting portion (302) are signally connected to each other via an electrical signal.

14. The system according to claim 13, wherein the first signal connecting portion (202) and the second signal connecting portion (302) are both USB interfaces or are both USB-OTG interfaces.

15. The system according to any of the preceding claims, wherein the assistant function is a GPS navigation function, a daily planning function, a video recording function, or a data storing function.

16. The system according to any of the preceding claims, wherein the mobile communication device is a mobile phone, and the digital assistant device is a personal digital assistant (PDA).

17. The system according to claim 16, wherein the mobile communication device is a smart mobile phone.
